# EUROPEAN PATENT APPLICATION

(11) **EP 2 713 552 A1**
(43) Date of publication of application: **02.04.2014**
(21) Application number: 13180208.4
(22) Date of filing: 13.08.2013
(51) Int. Cl.: H04L 12/18

(54) **Method for processing a multicast group, a data center interconnect router, and system**

(30) Priority: 29.09.2012 CN 201210374867
(71) Applicant: Huawei Technologies Co., Ltd., Longgang District, Shenzhen Guangdong 518129 (CN)
(72) Inventor: Yang, Jishang, Shenzhen Guangdong 518129 (CN)
(74) Representative: Körber, Martin Hans

(57) **Abstract**

The present invention provides a method for processing a multicast group, a DCI router, and a system. A data center interconnect (DCI) router of a first data center (DC) acquires (S101) multicast group information of a subnet in the first DC, where a first protocol is used for communications in the first DC; and sends (S102) a multicast processing request message encapsulated by a second protocol to a second DC, where the multicast processing request message includes the multicast group information. The second DC receives the multicast processing request and performs multicast group processing according to the multicast group processing information in the multicast processing request message. In this way, multicast groups in different DCs having same multicast group information establish a connection to form a cross-DC multicast group, and Virtual Machines (VM) in the same multicast group distributed in different DCs can implement cross-DC communicating. Data to be transmitted in a multicast group in the second DC may be transmitted to the multicast group in the first DC through the DCI router of the second DC and the DCI router of the first DC, so that cross-DC communicating of VMs in the same multicast group is implemented. In addition, because each multicast group in a DC uses the first protocol to acquire routing information for communicating and a simple second protocol is used to implement communicating between DCs, cross-DC route deployment for the VMs is simplified and cross-DC communicating of the VMs is easily implemented.

## Description

### TECHNICAL FIELD

Embodiments of the present invention relate to communications technologies, and in particular to a method for processing a multicast group, a DCI router, and a system.

### BACKGROUND

A data center (Data Center in English, DC for short) is the most important infrastructure of a cloud service. To support a huge number of tenants, the prior art puts forward the Network Virtualization using Generic Routing Encapsulation (Network Virtualization using Generic Route Encapsulation in English, NVGRE for short) protocol. In the prior art, when multiple DCs are interconnected by using the NVGRE protocol, each DC may include a data center interconnect (Data Center Interconnect in English, DCI for short) router and an NVGRE gateway. Each NVGRE gateway corresponds to a subnet, and each subnet may include a virtual machine (Virtual Machine in English, VM for short). The existing NVGRE protocol may support a multicast mode. In a scenario where DCs are not interconnected, each subnet in each DC may form a multicast group respectively, so that a VM in a subnet may perform multicast communications or migration. In a scenario where multiple DCs are interconnected, VMs in various subnets may form a cross-DC multicast group, so that VMs in subnets of different DCs can implement cross-DC communicating.

However, in the prior art, when VMs in subnets of different DCs implement cross-DC communicating, a relatively huge multicast tree needs to be maintained and therefore the cross-DC communicating is relatively complex to implement.

### SUMMARY

The present invention provides a method for processing a multicast group, a DCI router, and a system to resolve a problem that a huge multicast tree needs to be maintained when VMs in different DCs implement cross-DC communications, thereby simplifying cross-DC route deployment for the VMs, so that cross-DC communicating of the VMs is easily implemented.

According to a first aspect, the present invention provides a method for processing a multicast group, the method includes:
acquiring multicast group information of a subnet in a first data center DC, where a first protocol is used for communications in the first DC; and
sending a multicast processing request message encapsulated by a second protocol to a second DC, where the multicast processing request message includes the multicast group information.

With reference to the first aspect, the first protocol includes the Protocol Independent Multicast (PIM) protocol; and
the second protocol includes the Internet Group Management Protocol (IGMP) or the Multicast Listener Discovery (MLD) protocol.

With reference to the first aspect, before the sending a multicast processing request message encapsulated by a second protocol to a second DC, the method further includes:
receiving a multicast group leave message sent by a NVGRE gateway corresponding to the subnet; and
the sending a multicast processing request message encapsulated by a second protocol to a second DC includes:
   sending a multicast group leave request message including the multicast group information to the second DC, so that the second DC disconnects a connection with a multicast group corresponding to the multicast group information.

With reference to the first aspect, before the sending a multicast processing request message encapsulated by a second protocol to a second DC, the method further includes:
receiving a multicast group join message sent by the NVGRE gateway corresponding to the subnet; and
the sending a multicast processing request message encapsulated by a second protocol to a second DC includes:
   sending a multicast group join request message including the multicast group information to the second DC, so that the second DC establishes a connection with a multicast group corresponding to the multicast group information.

According to a second aspect, the present invention further provides a method for processing a multicast group, the method includes:
receiving, from a data center interconnect DCI router of a first data center DC, a multicast processing request message including multicast group information, where the multicast processing request message is encapsulated by a second protocol; where a first protocol is used for communications in the first DC; and
performing multicast group processing according to the multicast group information.

With reference to the second aspect, where the second protocol includes the Internet Group Management Protocol (IGMP) or the Multicast Listener Discovery (MLD) protocol.

With reference to the second aspect, the receiving, from a data center interconnect DCI router of a first DC, a multicast processing request message including multicast group information includes: receiving, from the DCI router of the first DC, a multicast group leave request message including the multicast group information; and
the performing multicast group processing according to the multicast group information includes: disconnecting a connection with a multicast group corresponding to the multicast group information of the first DC according to the multicast group leave request message.

With reference to the second aspect, the receiving, from a data center interconnect DCI router of a first DC, a multicast processing request message including multicast group information includes: receiving, from the DCI router of the first DC, a multicast group join request message including the multicast group information; and
the performing multicast group processing according to the multicast group information includes: establishing a connection with a multicast group corresponding to the multicast group information of the first DC according to the multicast group join request message.

According to a third aspect, the present invention provides a DCI router, the DCI router includes:
an acquiring module, configured to acquire multicast group information of a subnet in a first data center DC, where a first protocol is used for communications in the first DC; and
a sending module, configured to send a multicast processing request message encapsulated by a second protocol to a second DC, where the multicast processing request message includes the multicast group information.

With reference to the third aspect, the first protocol includes the Protocol Independent Multicast (PIM) protocol; and
the second protocol includes Internet Group Management Protocol (IGMP) or the Multicast Listener Discovery (MLD).

With reference to the third aspect, the acquiring module is configured to receive a multicast group leave message sent by a NVGRE gateway corresponding to the subnet;
and
the sending module is configured to send a multicast group leave request message including the multicast group information to the second DC, so that the second DC disconnects a connection with a multicast group corresponding to the multicast group information.

With reference to the third aspect, the acquiring module is configured to receive a multicast group join message sent by the NVGRE gateway corresponding to the subnet;
and
the sending module is configured to send a multicast group join request message including the multicast group information to the second DC, so that the second DC establishes a connection with a multicast group corresponding to the multicast group information.

According to a fourth aspect, the present invention further provides a DCI router, the DCI router includes:
a receiving module, configured to receive, from a data center interconnect DCI router of a first data center DC, a multicast processing request message including multicast group information, where the multicast processing request message is encapsulated by a second protocol, and a first protocol is used for communications in the first DC; and
a processing module, configured to perform multicast group processing according to the multicast group information.

With reference to the fourth aspect, the second protocol includes the Internet Group Management Protocol (IGMP) or the Multicast Listener Discovery (MLD) protocol.

With reference to the fourth aspect, the receiving module is configured to receive, from the DCI router, a multicast group leave request message including the multicast group information; and
the processing module is configured to disconnect a connection with a multicast group corresponding to the multicast group information of the first DC according to the multicast group leave request message.

With reference to the fourth aspect, the receiving module is configured to receive, from the DCI router, a multicast group join request message including the multicast group information; and
the processing module is configured to establish a connection with a multicast group corresponding to the multicast group information of the first DC according to the multicast group join request message.

According to a fifth aspect, the present invention provides a system for processing multicast group, including a first data center interconnect (DCI) router and a second data center interconnect (DCI) router, where the first DCI router is the DCI router according to the third aspect of the present invention, the second DCI router is the DCI router according to the fourth aspect of the present invention, and there is a communications connection between the first DCI router and the second DCI router.

By using the method for processing multicast group, the DCI router, and the system provided in the embodiments of the present invention, multicast group information of a subnet in a first DC that uses a first protocol for communications is acquired, and a multicast processing request message encapsulated by a second protocol is sent to a second DC, so that the second DC performs multicast group processing. In this way, multicast groups in different DCs having same multicast group information establish a connection to form a cross-DC multicast group, and VMs in the same multicast group distributed in different DCs can implement cross-DC communicating. In addition, because each multicast group in a DC uses the first protocol to acquire routing information for communicating and a simple second protocol is used to implement communicating between DCs, cross-DC route deployment for the VMs is simplified and cross-DC communicating of the VMs is easily implemented.

### BRIEF DESCRIPTION OF DRAWINGS

To make the technical solutions in the embodiments of the present invention more comprehensible, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a first embodiment of a method for processing multicast group according to the present invention;
FIG. 2 is a flowchart of a second embodiment of a method for processing multicast group according to the present invention;
FIG. 3 is a flowchart of a third embodiment of a method for processing multicast group according to the present invention;
FIG. 4 is a schematic structural diagram of a first embodiment of a DCI router according to the present invention;
FIG. 5 is a schematic structural diagram of a third embodiment of a DCI router according to the present invention;
FIG. 6 is a schematic structural diagram of a fourth embodiment of a DCI router according to the present invention;
FIG. 7 is a schematic structural diagram of a fifth embodiment of a DCI router according to the present invention;
FIG. 8 is a schematic structural diagram of a seventh embodiment of a DCI router according to the present invention; and
FIG. 9 is a schematic structural diagram of a first embodiment of a multicast group processing system.

### DESCRIPTION OF THE EMBODIMENTS

To make the objectives, technical solutions, and advantages of the embodiments of the present invention more comprehensible, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In a scenario where multiple DCs are interconnected, VMs in each subnet in each DC may form a multicast group, and each multicast group uses a Protocol Independent Multicast (Protocol Independent Multicast in English, PIM for short) protocol to generate a multicast distribution tree in each multicast group. When a source VM in the multicast group sends data to each receiver VM, a loop-free transmission path from the source VM to each receiver VM may be acquired according to the multicast distribution tree, so that the data is sent to each receiver VM in the multicast group. When a VM in a subnet is migrated from a DC where the VM is located to another DC, a multicast group corresponding to the subnet is distributed in all other DCs. To enable the data sent by the source VM to be received by VMs that are distributed in the other DCs but belong to a same multicast group, the PIM protocol also needs to be used between DCs to generate a multicast distribution tree. Accordingly, the multicast distribution tree in each DC and the multicast distribution tree between DCs form a large multicast distribution tree. In this way, the source VM may send, through the large multicast distribution tree, data to the VMs that are distributed in the DCs and belong to the same multicast group, thereby implementing cross-DC communications of the VMs in the same multicast group. However, because use of the PIM protocol is complex and the number of devices in a DC is large, the multicast distribution tree formed across the DCs is very large. Therefore, many devices participate in the large multicast distribution tree, and maintenance of the large multicast distribution tree causes relatively complex implementation of cross-DC communicating of the VMs. The following method for processing a multicast group, router, and system provided by the embodiments of the present invention may be used to effectively resolve the preceding problem.

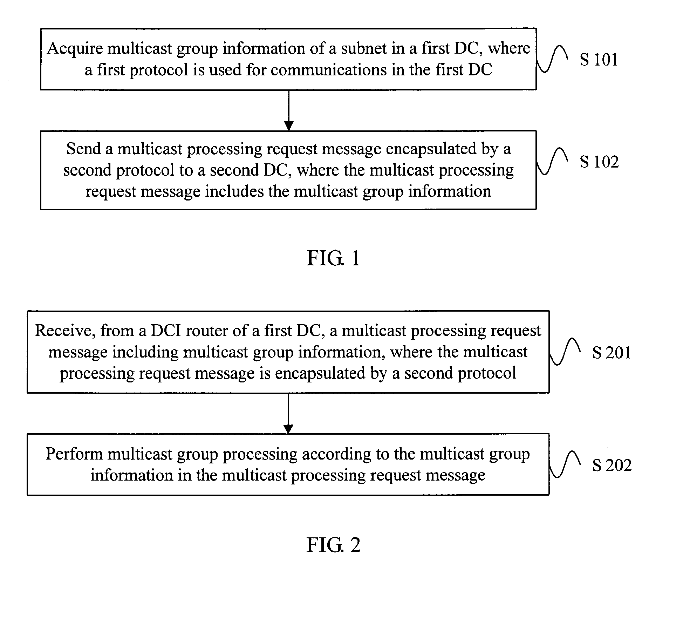

FIG. 1 is a flowchart of a first embodiment of a method for processing a multicast group according to the present invention. As shown in FIG 1, the method in this embodiment may include the following steps:
S101. Acquire multicast group information of a subnet in a first DC, where a first protocol is used for communications in the first DC.

At least one subnet exists in each DC, and each subnet is a subnet formed by VMs. One subnet is one multicast group, and each DC is configured with at least one DCI router; and each DC establishes communications connections with other DCs through the DCI router. In the description of this embodiment of the present invention, it is assumed that one DCI router is configured in each DC.

A DCI router of the first DC acquires the multicast group information corresponding to the subnet in the first DC. In a feasible implementation manner, the multicast group information of the subnet in the first DC is configured for the DCI router directly. In a DC using the NVGRE protocol, because subnet information corresponding to a VM comes from a virtual machine management (Virtual Machine Management in English, VMM for short) module of a management system, the subnet information from the management system may be configured for the DCI router. The subnet information includes: a subnet identity, multicast group information of the subnet, complete information of routing in the subnet, or the like. The DCI router may acquire the multicast group information corresponding to the subnet by using the subnet information. Alternatively, because the management system needs to send the VM information and subnet information to an NVGRE gateway, so that the NVGRE gateway corresponds to a subnet, generally a plug-in is arranged for implementing communications between the management system and the NVGRE gateway. Therefore, the plug-in may be improved accordingly; for the DCI router, only the multicast group information of the subnet in the subnet information is sent to the DCI router, so that the DCI router acquires the multicast group information of the subnet. In another feasible implementation manner, the DCI router may acquire the multicast group information from the NVGRE gateway. Because all subnet information in the DC is configured in the NVGRE gateway, the DCI router may establish a connection with the NVGRE gateway, and the NVGRE gateway notifies the multicast group information of the subnet to the DCI router. Because multicast IP addresses of different multicast groups are different, preferentially the multicast group information may be a multicast group IP address.

When multiple subnets exist in the first DC, multicast group information of one or more subnets may be acquired as necessary.

Because a subnet is a multicast group, to implement communications between VMs in a multicast group in the first DC, a first protocol may be used in the multicast group to construct a multicast route for implementing the communications. The first protocol may be the Distance Vector Multicast Routing Protocol (Distance Vector Multicast Routing Protocol in English, DVMRP for short), Multicast Open Shortest Path First (Multicast Open Shortest Path First in English, MOSPF for short), PIM, or the like, and is not limited herein by the present invention. In addition, an implementation principle of using the first protocol for the communications in each DC is similar to that of the prior art, and no further details are provided herein by the present invention.

S102. Send a multicast processing request message encapsulated by a second protocol to a second DC, where the multicast processing request message includes the multicast group information.

In this embodiment, the second protocol may be a protocol capable of forming a single-hop connection between a host and a router, and is therefore simpler than a multicast routing protocol. When the DCI router of the first DC acquires the multicast group information of the subnet in the first DC, the DCI router of the first DC may know multicast groups included in the first DC. In this case, the DCI router is used as a proxy host of each multicast group in the first DC to send the multicast processing request message encapsulated by the second protocol to the second DC, where the multicast processing request message includes the multicast group information. Accordingly, after receiving the multicast processing request message, a DCI router of the second DC processes a corresponding multicast group according to the multicast group information in the multicast processing request message. The multicast processing request message may be a multicast group join request message, a multicast group leave request message, or the like. Accordingly, after receiving the multicast group join request message or the multicast group leave request message, the DCI router of the second DC establishes a connection with a multicast group corresponding to the multicast group information in the first DC or disconnects the connection with the multicast group corresponding to the multicast group information in the first DC, or the like; in this way, multicast groups corresponding to same multicast information in each DC establish a connection to form a cross-DC multicast group. Data to be transmitted in a multicast group in the second DC may be transmitted to the multicast group in the first DC through the DCI router of the second DC and the DCI router of the first DC, so that cross-DC communicating of VMs in the same multicast group is implemented; and further, when any multicast group in a DC is migrated out of the DC, other DCs disconnect connections with the corresponding multicast group of the DC, so that data to be transmitted in the multicast group in each DC does not need to be transmitted to this DC, thereby avoiding a waste of a bandwidth resource. A multicast group of a DC is migrated out of the DC means all VMs of the multicast group are migrated out of the DC; and a multicast group is migrated into a DC means at least one VM of the multicast group is migrated into the DC.

When multiple subnets exist in the first DC and multicast group information of multiple subnets is acquired, the sending a multicast processing request message encapsulated by a second protocol to a second DC may be: sending a multicast processing request message to the second DC, where the multicast processing request message includes multicast group information of a plurality of subnets; or may also be: sending multiple multicast processing request messages to the second DC, where each multicast processing request message includes multicast group information of a subnet. When a network where the DCs are located is an Internet protocol version 4 (Internet Protocol version 4 in English, IPv4 for short) network, the second protocol is the Internet Group Management Protocol (Internet Group Management Protocol in English, IGMP for short); or when a network where the DCs are located is an Internet protocol version 6 (Internet Protocol version 6 in English,IPv6 for short) network, the second protocol is the Multicast Listener Discovery (Multicast Listener Discovery in English, MLD for short) protocol.

In this embodiment, a DCI router acquires multicast group information of a subnet in a first DC that uses a first protocol for communications, and sends a multicast processing request message encapsulated by a second protocol to a second DC, so that the second DC performs multicast processing. In this way, multicast groups in different DCs having same multicast group information establish a connection to form a cross-DC multicast group, and VMs in the same multicast group distributed in different DCs can implement cross-DC communicating. In addition, because each multicast group in a DC uses the first protocol to acquire routing information for communicating and simply the second protocol is used to implement communicating between DCs, cross-DC route deployment for the VMs is simplified and cross-DC communicating of the VMs is easily implemented.

FIG. 2 is a flowchart of a second embodiment of a method for processing a multicast group according to the present invention. As shown in FIG. 2, the method in this embodiment may include the following steps:
S201. Receive, from a DCI router of a first DC, a multicast processing request message including multicast group information, where the multicast processing request message is encapsulated by a second protocol.

In this embodiment, a DCI router of a second DC receives, from the DCI router of the first DC, the multicast processing request message including the multicast group information, where the multicast processing request message is encapsulated by the second protocol. Preferentially, the multicast group information may be a multicast group IP address. When a network where the DCs are located is an IPv4 network, the second protocol is the IGMP; or when a network where the DCs are located is an IPv6 network, the second protocol is the MLD protocol. In addition, the first protocol is used for communications in the second DC, that is, multicast groups in the second DC may use the first protocol to construct a multicast route for implementing the communications, where the first protocol may be the DVMRP, MOSPF, PIM, or the like, and is not limited herein by the present invention; and an implementation principle of using the first protocol for the communications in each DC is similar to that of the prior art, and no further details are provided herein by the present invention.

S202. Perform multicast group processing according to the multicast group information in the multicast processing request message.

In this embodiment, after receiving the multicast processing request message, the DCI router of the second DC acquires the multicast group information in the multicast processing request message, and performs multicast group processing according to the multicast group information. The multicast processing request message may be a multicast group join request message, a multicast group leave request message, or the like. The DCI router of the second DC receives the multicast group join request message or the multicast group leave request message, and establishes a connection with a multicast group corresponding to the multicast group information in the first DC or disconnects the connection with the multicast group corresponding to the multicast group information in the first DC; and in this way, a multicast group corresponding to same multicast group information in each DC establishes a connection to form a cross-DC multicast group. Data to be transmitted in a multicast group in the second DC may be transmitted to the multicast group in the first DC through the DCI router of the second DC and the DCI router of the first DC, so that cross-DC communicating of VMs in the same multicast group is implemented; and further, when any multicast group in a DC is migrated out of the DC, other DCs disconnect connections with the corresponding multicast group of the DC, so that data to be transmitted in the multicast group in each DC does not need to be transmitted to this DC, thereby avoiding a waste of a bandwidth resource.

When multiple subnets exist in the first DC, the receiving, from a DCI router of a first DC, a multicast processing request message including multicast group information may be: receiving, by the second DC, a multicast processing request message from the DCI router of the first DC, where the multicast processing request message includes multicast group information of a plurality of subnets in the first DC; or may be: receiving, by the second DC, multiple multicast processing request messages from the DCI router of the first DC, where each multicast processing request message includes multicast group information of a subnet.

In this embodiment, a DCI router of a second DC receives, from a DCI router of a first DC, a multicast processing request message including multicast group information, and performs multicast group processing according to the multicast group information. In addition, a first protocol is used for communications in the second DC, and the multicast processing request message sent by the first DC is encapsulated by a second protocol. In this way, multicast groups in different DCs having same multicast group information establish a connection to form a cross-DC multicast group, and VMs in the same multicast group distributed in different DCs can implement cross-DC communicating. In addition, because each multicast group in a DC uses the first protocol to acquire routing information for communicating and simply the second protocol is used to implement communicating between DCs, cross-DC route deployment for the VMs is simplified and cross-DC communicating of the VMs is easily implemented.

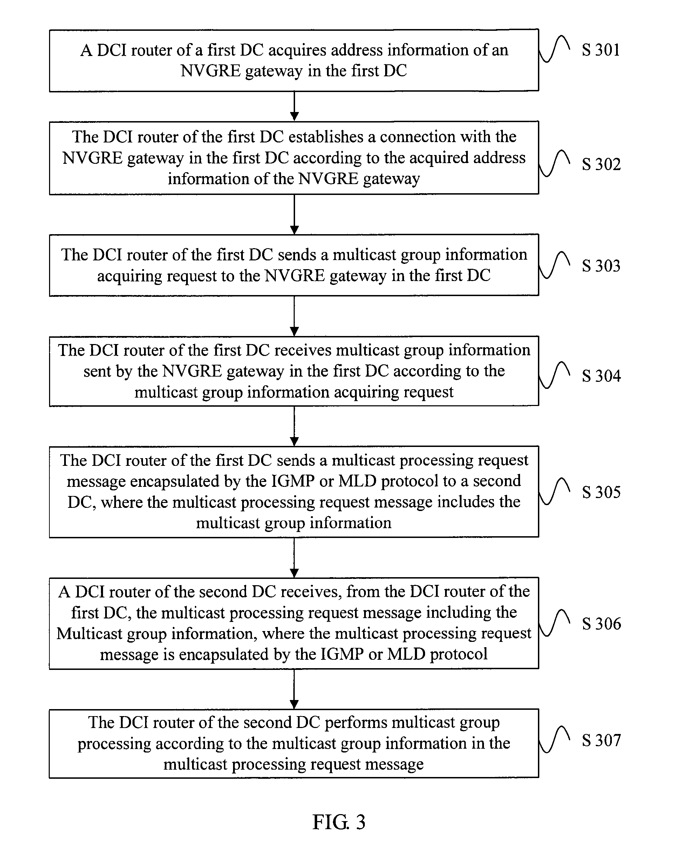

FIG. 3 is a flowchart of a third embodiment of a method for processing a multicast group according to the present invention. As shown in FIG. 3, the method in this embodiment may include the following steps:
S301. A DCI router of a first DC acquires address information of an NVGRE gateway in the first DC.

Because an NVGRE gateway is configured in a DC, whereas one NVGRE gateway corresponds to one or more subnet, subnet is a multicast group, and VMs exist in a multicast group. The DCI router of the first DC may acquire address information of the NVGRE gateway in the first DC according to two feasible implementation manners. A first implementation manner is a static configuration manner, that is, an IP address of the NVGRE gateway is directly configured for the DCI router of the first DC; and a second implementation manner is a dynamic discovery mechanism, in which the DCI router of the first DC acquires the IP address of the NVGRE gateway by using a dynamic protocol. There may be one or more NVGRE gateways.

S302. The DCI router of the first DC establishes a connection with the NVGRE gateway in the first DC according to the acquired address information of the NVGRE gateway.

The DCI router of the first DC establishes a connection with the NVGRE gateway according to the acquired address of the NVGRE gateway, where the connection between the DCI router of the first DC and the NVGRE gateway may be a secure connection established by using the secure shell (Secure Shell in English, SSH for short) protocol, the TELNET protocol, the network configuration (NET Configuration in English, NETConf for short) protocol, or the like, which is not limited herein by the present invention.

S303. The DCI router of the first DC sends a multicast group information acquiring request to the NVGRE gateway in the first DC.

After the connection between the DCI router of the first DC and the NVGRE gateway in the first DC is established, the DCI router of the first DC sends a multicast group information acquiring request to the NVGRE gateway in the first DC, so that the DCI router of the first DC acquires information about each multicast group in the first DC.

S304. The DCI router of the first DC receives multicast group information sent by the NVGRE gateway in the first DC according to the multicast group information acquiring request.

When the NVGRE gateway of the first DC receives the multicast group information acquiring request, the NVGRE gateway sends configured multicast group information to the DCI router of the first DC through the connection established in step S302 in this embodiment.

It should be noted that in this embodiment, how the DCI router of the first DC acquires the multicast group information of the subnet from the NVGRE gateway is described in detail in steps S301 to S304.

S305. The DCI router of the first DC sends a multicast processing request message encapsulated by the IGMP or MLD protocol to a second DC, where the multicast processing request message includes the multicast group information.

When the DCI router of the first DC receives the multicast group information sent by the NVGRE gateway in the first DC according to the multicast group information acquiring request, the DCI router of the first DC sends a multicast processing request message encapsulated by the IGMP or MLD protocol to the second DC, where the multicast group processing request message includes multicast group information and the multicast group information is the multicast group information sent by the NVGRE gateway in the first DC according to the multicast group information acquiring request. If the multicast processing request message is a multicast group join request message, when the first DC and the second DC are located in an IPv4 network, the IGMP protocol is the IGMPv1, the IGMPv2, or the IGMPv3; or when the first DC and the second DC are located in an IPv6 network, the MLD protocol is the MLDv1 or the MLDv2.

In this embodiment, the PIM protocol is used for communications in the first DC, where the PIM protocol may also be the Protocol Independent Multicast-Sparse Mode (Protocol Independent Multicast-Sparse Mode in English, PIM-SM for short) protocol, the Protocol Independent Multicast-Dense Mode (Protocol Independent Multicast-Dense Mode in English, PIM-DM for short) protocol, or the Bi-directional Protocol Independent Multicast (Bi-directional Protocol Independent Multicast in English, BIDIR-PIM for short) protocol, which is not limited herein by the present invention. In addition, an implementation principle of using the above PIM protocols for the communications in the first DC is similar to that of the prior art, and no further details are provided herein by the present invention.

S306. A DCI router of the second DC receives, from the DCI router of the first DC, the multicast processing request message including the multicast group information, where the multicast processing request message is encapsulated by the IGMP or MLD protocol.

The DCI router of the second DC receives, from the DCI router of the first DC, a multicast group join request message including the multicast group information, where the multicast group join request message is encapsulated by the IGMP or MLD protocol. For content of the IGMP or MLD protocol, reference may be made to related description in step S305, and no further details are provided herein by the present invention. It should be noted that the PIM protocol is also used for communications inside the second DC; and reference may be made to related description in step S305 for details, and no further details are provided herein by the present invention.

S307. The DCI router of the second DC performs multicast group processing according to the multicast group information in the multicast processing request message.

When the DCI router of the second DC receives, from the DCI router of the first DC, the multicast group join request message including the multicast group information, the DCI router of the second DC may acquire the multicast group information in the multicast group join request message; search, according to the multicast group information, for multicast group information of the second DC stored on the DCI router of the second DC; and determine whether there is multicast group information same as the multicast group information in the multicast group join request message. The multicast group information of the second DC stored on the DCI router of the second DC may be acquired by using a method similar to the method for acquiring, by the DCI router of the first DC, multicast group information as described in steps S301-S304 in this embodiment; and reference may be made to the preceding description in this embodiment for details, and no further details are provided herein by the present invention. When the DCI router of the second DC determines that there is no multicast group information same as the multicast group information in the multicast group join request message, the DCI router of the second DC does not perform any processing. When the DCI router of the second DC determines that there is multicast group information same as the multicast group information in the multicast group join request message, the DCI router of the second DC establishes a connection with a multicast group corresponding to the multicast group information.

A specific implementation process in which the DCI router of the second DC establishes a connection with the multicast group corresponding to the multicast group information of the first DC may be as follows: First, the DCI router of the second DC determines whether the DCI router has an inbound interface of a multicast group corresponding to the second DC; if the DCI router of the second DC determines that the DCI router has no inbound interface of the multicast group corresponding to the second DC, the DCI router of the second DC sends a PIM join message to the multicast group of the second DC, so that data to be transmitted in the second DC may be transmitted to the DCI router of the second DC; and correspondingly, in this case the DCI router of the second DC has an inbound interface of the multicast group corresponding to the second DC, and then the DCI router of the second DC adds an interconnection interface with the DCI router of the first DC to the multicast group of the second DC; or if the DCI router of the second DC determines that the DCI router has an inbound interface of the multicast group corresponding to the second DC, the DCI router of the second DC directly adds the interconnection interface with the DCI router of the first DC to the multicast group of the second DC. Therefore, the second DC can establish a connection with the multicast group corresponding to the multicast group information in the multicast group join request message, so that multicast groups in different DCs having same multicast group information establish a connection to form a cross-DC multicast group, and data to be transmitted in the multicast group of the second DC is transmitted to a same multicast group in the first DC through the DCI router of the second DC, the interconnection interface, and the DCI router of the first DC. Therefore, VMs in the same multicast group can implement cross-DC communicating.

Further, in this embodiment steps S305-S307 are further described in detail by using two feasible implementation manners.

In a first feasible implementation manner, for the NVGRE gateway that establishes a connection with the DCI router of the first DC, when all VMs of the subnet in the NVGRE gateway are migrated out of the DC or shut down, the NVGRE gateway sends a multicast group leave message corresponding to the subnet to the DCI router of the first DC through the established connection. After receiving the multicast group leave message, the DCI router of the first DC deletes the multicast group information corresponding to the subnet, which is stored on the DCI router of the first DC, and sends a multicast group leave request message encapsulated by the IGMPv2 or MLDv1 to the second DC, where the multicast group leave request message includes multicast group information of a multicast group that has left the first DC, so that the second DC disconnects the connection with the multicast group corresponding to the multicast group information. It should be noted that the multicast group leave message can be sent actively only when the IGMP protocol is the IGMPv2 or when the MLD protocol is the MLDv1.

When the DCI router of the second DC receives, from the DCI router of the first DC, the multicast group leave request message including the multicast group information, the DCI router of the second DC may acquire the multicast group information in the multicast group leave request message; search, according to the multicast group information, for multicast group information of the second DC stored on the DCI router of the second DC; and determine whether there is multicast group information same as the multicast group information in the multicast group leave request message. The multicast group information of the second DC stored on the DCI router of the second DC may be acquired by using a method similar to the method for acquiring, by the DCI router of the first DC, multicast group information as described in steps S301-S304 in this embodiment, and no further details are provided herein by the present invention. When the DCI router of the second DC determines that there is no multicast group information same as the multicast group information in the multicast group leave request message, the DCI router of the second DC does not perform any processing. When the DCI router of the second DC determines that there is multicast group information same as the multicast group information in the multicast group leave request message, the DCI router of the second DC disconnects a connection with a multicast group corresponding to the multicast group information.

A specific implementation process in which the DCI router of the second DC disconnects a connection with the multicast group corresponding to the multicast group information of the first DC may be as follows: The DCI router of the second DC deletes the interconnection interface with the DCI router of the first DC from the multicast group corresponding to the multicast group information, and further determines whether the DCI router of the second DC is a last interface for receiving the data to be transmitted in the multicast group of the second DC, that is, whether there is a next-hop device capable of receiving the data after the DCI router of the second DC receives the data to be transmitted in the multicast group of the second DC; if determining that the DCI router of the second DC is not the last interface for receiving the data to be transmitted in the multicast group of the second DC, the DCI router of the second DC does not perform any operation; if determining that the DCI router of the second DC is the last interface for receiving the data to be transmitted in the multicast group of the second DC, that is, the multicast group is included in only the second DC and not included in other DCs, the DCI router of the second DC sends a PIM prune message to the second DC, so that the DCI router of the second DC leaves the multicast group of the second DC. Therefore, the DCI router of the second DC disconnects the connection with the multicast group corresponding to the multicast group information of the first DC, and the data to be transmitted in the multicast group in the second DC is not forwarded to the first DC again, thereby avoiding a waste of a bandwidth resource.

In a second feasible implementation manner, for the NVGRE gateway that establishes a connection with the DCI router of the first DC, when a new subnet appears in the NVGRE gateway, the NVGRE gateway sends a multicast group join message corresponding to the new subnet to the DCI router of the first DC through the established connection, where the multicast group join message may carry multicast group information of the new subnet. After receiving the multicast group join message, the DCI router of the first DC acquires the multicast group information of the new subnet, and sends a multicast group join request message encapsulated by the IGMP protocol or MLD protocol to the second DC, where the multicast group join request message includes multicast group information of a multicast group newly migrated to the first DC, so that the second DC establishes a connection with the multicast group corresponding to the multicast group information. The DCI router of the second DC receives, from the DCI router of the first DC, the multicast group join request message including the multicast group information, and establishes, according to the multicast group join request message, a connection with the multicast group corresponding to the multicast group information in the first DC. For a specific implementation process in which the DCI router of the second DC establishes a connection with the multicast group corresponding to the multicast group information in the first DC, reference may be made to detailed description in step S307 in this embodiment, and no further details are provided herein by the present invention.

Further, when the DCI router of the first DC is configured with only the IGMPv1, the IGMPv3, or the MLDv2, the DCI router of the first DC can actively send a multicast group join request message but cannot actively send a multicast group leave request message. Therefore, the DCI router of the second DC may send a multicast group query request message encapsulated by the IGMP or MLD protocol to the first DC. After receiving the multicast group query request message, the DCI router of the first DC sends the multicast group information of the first DC stored on the DCI router of the first DC to the second DC; and then the second DC may know all multicast groups of the first DC according to the multicast group information of the first DC, and compare the multicast groups of the first DC with the multicast groups to which the interconnection interface between the second DC and the first DC joins; if the multicast groups of the first DC are in a one-to-one mapping relationship with the multicast groups that the interconnect interface joins, the second DC does not perform any operation. However, if a multicast group that the interconnect interface joins does not exist in the first DC, the second DC disconnects the connection with the multicast group corresponding to the multicast group information. For a specific implementation process in which the second DC disconnects the connection with the multicast group corresponding to the multicast group information of the first DC, reference may be made to the preceding description in this embodiment, and no further details are provided herein by the present invention.

In this embodiment, a DCI router of a first DC acquires multicast group information of a subnet in the first DC from an NVGRE gateway of the first DC, where the PIM protocol is used for communications in the first DC, and sends a multicast group join request message encapsulated by the IGMP or MLD protocol and including multicast group information to a second DC; and a DCI router of the second DC establishes, according to the multicast group join request message, a connection with a multicast group corresponding to the multicast group information. Further, when a multicast group in the first DC is migrated out of the first DC, the DCI router of the first DC sends a multicast group leave request message encapsulated by the IGMPv2 or MLDv1 and including multicast group information to the second DC; and the DCI router of the second DC disconnects a connection with a multicast group corresponding to the multicast group information according to the multicast group leave request message. Further, when a new multicast group is migrated to the first DC, the DCI router of the first DC resends a multicast group join request message encapsulated by the IGMP or MLD protocol and including multicast group information to the second DC; and the DCI router of the second DC establishes a connection with a multicast group corresponding to the multicast group information according to the multicast group join request message. In this way, multicast groups in different DCs having same multicast group information establish a connection to form a cross-DC multicast group, and VMs in the same multicast group distributed in different DCs can implement cross-DC communicating. In addition, because each multicast group in a DC uses a first protocol to acquire routing information for communicating and simply a second protocol is used to implement communicating between DCs, cross-DC route deployment for the VMs is simplified and cross-DC communicating of the VMs is easily implemented.

It should be noted that in the embodiments of the present invention, the second DC may be other DCs than the first DC; and in specific implementation, a DCI router of a DC may not only execute functions executed by the DCI router of the first DC, but also execute functions executed by the DCI router of the second DC.

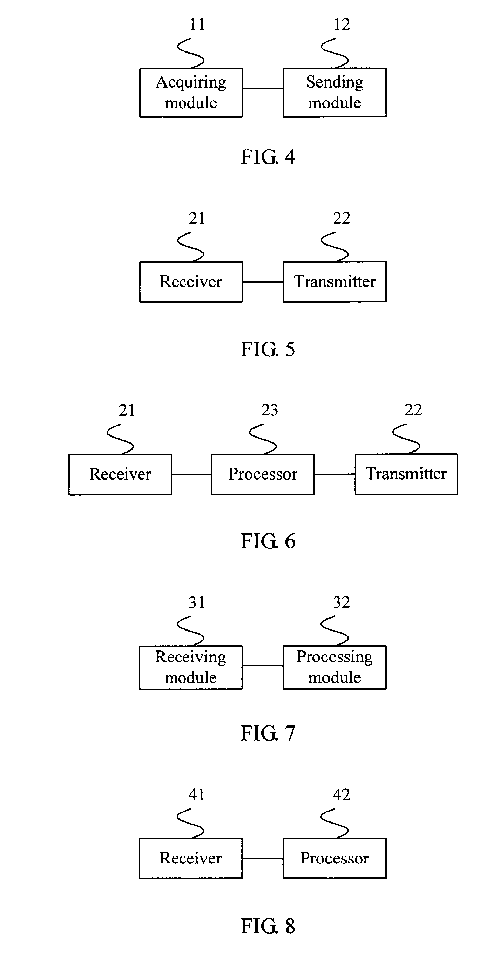

FIG. 4 is a schematic structural diagram of a first embodiment of a DCI router according to the present invention. As shown in FIG. 4, the DCI router in this embodiment may include: an acquiring module 11 and a sending module 12. The acquiring module 11 is configured to acquire multicast group information of a subnet in a first data center DC, where a first protocol is used for communications in the first DC; and the sending module 12 is configured to send a multicast processing request message encapsulated by a second protocol to a second DC, where the multicast processing request message includes the multicast group information.

The DCI router in this embodiment may be used to execute the technical solution of the method embodiment shown in FIG. 1. Its implementation principle and technical effect are similar, and no further details are provided herein.

In a second embodiment of the DCI router according to the present invention, on a basis of structure of the DCI router shown in FIG. 4, the PIM protocol is used for communications in the first DC; and the sending module 12 is configured to send a multicast processing request message encapsulated by the IGMP or MLD protocol to the second DC.

Further, the acquiring module 11 is configured to send a multicast group information acquiring request to an NVGRE gateway in the first DC; and receive multicast group information sent by the NVGRE gateway according to the multicast group information acquiring request.

Further, the acquiring module 11 is configured to acquire address information of the NVGRE gateway; and establish a connection with the NVGRE gateway according to the address information.

Further, in a first feasible implementation manner, the acquiring module 11 is further configured to receive a multicast group leave message sent by the NVGRE gateway corresponding to the subnet; and the sending module 12 is configured to send a multicast group leave request message including the multicast group information to the second DC, so that the second DC disconnects a connection with a multicast group corresponding to the multicast group information.

In a second feasible implementation manner, the acquiring module 11 is further configured to receive a multicast group join message sent by the NVGRE gateway corresponding to the subnet; and the sending module 12 is configured to send a multicast group join request message including the multicast group information to the second DC, so that the second DC establishes a connection with a multicast group corresponding to the multicast group information.

The DCI router in this embodiment may be used to execute the technical solution executed by the DCI router of the first DC in the method embodiment shown in FIG. 3. Its implementation principle and technical effect are similar, and no further details are provided herein.

FIG. 5 is a schematic structural diagram of a third embodiment of a DCI router according to the present invention. As shown in FIG. 5, the DCI router in this embodiment may include: a receiver 21 and a transmitter 22. The receiver 21 is configured to acquire multicast group information of a subnet in a first data center DC, where a first protocol is used for communications in the first DC; and the transmitter 22 is configured to send a multicast processing request message encapsulated by a second protocol to a second DC, where the multicast processing request message includes the multicast group information.

The DCI router in this embodiment may be used to execute the technical solution of the method embodiment shown in FIG. 1. Its implementation principle and technical effect are similar, and no further details are provided herein.

FIG. 6 is a schematic structural diagram of a fourth embodiment of a DCI router according to the present invention. As shown in FIG. 6, on a basis of the structure of the DCI router shown in FIG. 5, the PIM protocol is used for communications in the first DC; and the receiver 22 is configured to send a multicast processing request message encapsulated by the IGMP or MLD protocol to the second DC. The transmitter 22 is further configured to send a multicast group information acquiring request to an NVGRE gateway in the first DC; and the receiver 21 is configured to receive multicast group information sent by the NVGRE gateway according to the multicast group information acquiring request.

Further, the receiver 21 is configured to acquire address information of the NVGRE gateway. The DCI router in this embodiment further includes a processor 23. The processor 23 is configured to establish a connection with the NVGRE gateway according to the address information.

Further, in a first feasible implementation manner, the receiver 21 is configured to receive a multicast group leave message sent by the NVGRE gateway corresponding to the subnet; and the transmitter 22 is configured to send a multicast group leave request message including the multicast group information to the second DC, so that the second DC disconnects a connection with a multicast group corresponding to the multicast group information.

In a second feasible implementation manner, the receiver 21 is further configured to receive a multicast group join message sent by the NVGRE gateway corresponding to the subnet; and the transmitter 22 is configured to send a multicast group join request message including the multicast group information to the second DC, so that the second DC establishes a connection with a multicast group corresponding to the multicast group information.

The DCI router in this embodiment may be used to execute the technical solution executed by the DCI router of the first DC in the method embodiment shown in FIG. 3. Its implementation principle and technical effect are similar, and no further details are provided herein.

FIG. 7 is a schematic structural diagram of a fifth embodiment of a DCI router according to the present invention. As shown in FIG. 7, the DCI router in this embodiment may include: a receiving module 31 and a processing module 32. The receiving module 31 is configured to receive, from a data center interconnect DCI router of a first DC, a multicast processing request message including multicast group information, where the multicast processing request message is encapsulated by a second protocol; and the processing module 32 is configured to perform multicast group processing according to the multicast group information.

The DCI router in this embodiment may be used to execute the technical solution of the method embodiment shown in FIG. 2. Its implementation principle and technical effect are similar, and no further details are provided herein.

In a sixth embodiment of the DCI router according to the present invention, on a basis of structure of the DCI router shown in FIG. 7, the multicast processing request message is encapsulated by the IGMP or MLD protocol.

Further, in a first feasible implementation manner, the receiving module 31 is configured to receive, from the DCI router of a first DC, a multicast group leave request message including the multicast group information; and the processing module 32 is configured to disconnect a connection with a multicast group in the first DC corresponding to the multicast group information according to the multicast group leave request message.

In a second feasible implementation manner, the receiving module 31 is configured to receive, from the DCI router of the first DC, a multicast group join request message including the multicast group information; and the processing module 32 is configured to establish a connection with a multicast group in the first DC corresponding to the multicast group information according to the multicast group join request message.

The DCI router in this embodiment may be used to execute the technical solution executed by the DCI router of the second DC in the method embodiment shown in FIG. 3. Its implementation principle and technical effect are similar, and no further details are provided herein.

FIG. 8 is a schematic structural diagram of a seventh embodiment of a DCI router according to the present invention. As shown in FIG. 8, the DCI router in this embodiment may include: a receiver 41 and a processor 42. The receiver 41 is configured to receive, from a data center interconnect DCI router of a first DC, a multicast processing request message including multicast group information, where the multicast processing request message is encapsulated by a second protocol; and the processor 42 is configured to perform multicast group processing according to the multicast group information.

The DCI router in this embodiment may be used to execute the technical solution of the method embodiment shown in FIG. 2. Its implementation principle and technical effect are similar, and no further details are provided herein.

In an eighth embodiment of the DCI router according to the present invention, on a basis of structure of the DCI router shown in FIG. 8, the multicast processing request message is encapsulated by the IGMP or MLD protocol. In a first feasible implementation manner, the receiver 41 is configured to receive, from the DCI router of the first DC, a multicast group leave request message including the multicast group information; and the processor 42 is configured to disconnect a connection with a multicast group corresponding to the multicast group information of the first DC according to the multicast group leave request message.

In a second feasible implementation manner, the receiver 41 is configured to receive, from the DCI router of the first DC, a multicast group join request message including the multicast group information; and the processor 42 is configured to establish a connection with a multicast group corresponding to the multicast group information in the first DC according to the multicast group join request message.

The DCI router in this embodiment may be used to execute the technical solution executed by the DCI router of the second DC in the method embodiment shown in FIG. 3. Its implementation principle and technical effect are similar, and no further details are provided herein.

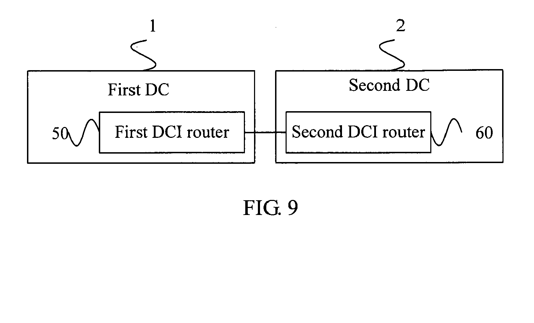

FIG. 9 is a schematic structural diagram of a first embodiment of a system for processing multicast group according to the present invention. As shown in FIG. 9, the system for processing multicast group may include: a first DCI router 50 and a second DCI router 60. There is a communications connection between the first DCI router 50 and the second DCI router 60; and the first DCI router 50 is a DCI router in a first DC 1, and the second DCI router 60 is a DCI router in a second DC 2. The first DCI router 50 may use the structure shown in any one of the first to the fourth embodiments of the DCI router according to the present invention, and accordingly can execute the technical solution shown in FIG. 1 or the technical solution executed by the DCI router of the first DC in the method embodiment shown in FIG. 3. An implementation principle and a technical effect of the first DCI router 50 are similar, and no further details are provided herein. The second DCI router 60 may use the structure shown in any one of the fifth to the eighth embodiments of the DCI router according to the present invention, and accordingly can execute the technical solution shown in FIG. 2 or the technical solution executed by the DCI router of the second DC in the method embodiment shown in FIG. 3. An implementation principle and a technical effect of the second DCI router 60 are similar, and no further details are provided herein.

A person of ordinary skill in the art may understand that all or a part of the steps in the method embodiments may be implemented by a program instructing relevant hardware. The program may be stored in a computer readable storage medium. When the program runs, the steps in the method embodiments are performed. The storage medium includes any medium that is capable of storing program codes, such as a ROM, a RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, without departing from the scope of the technical solutions of the embodiments of the present invention.

## Claims

1. A method for processing a multicast group, comprising:
acquiring multicast group information of a subnet in a first data center, DC, wherein a first protocol is used for communications in the first DC; and
sending a multicast processing request message encapsulated by a second protocol to a second DC, wherein the multicast processing request message comprises the multicast group information.

2. The method according to claim 1, wherein the first protocol comprises the Protocol Independent Multicast, PIM, protocol; and
the second protocol comprises the Internet Group Management Protocol, IGMP, or the Multicast Listener Discovery, MLD, protocol.

3. The method according to claim 1 or 2, wherein before the sending a multicast processing request message encapsulated by a second protocol to a second DC, the method further comprises:
receiving a multicast group leave message sent by a Network Virtualization using Generic Routing Encapsulation, NVGRE, gateway corresponding to the subnet; and
the sending a multicast processing request message encapsulated by a second protocol to a second DC comprises:
sending a multicast group leave request message comprising the multicast group information to the second DC, so that the second DC disconnects a connection with a multicast group corresponding to the multicast group information.

4. The method according to claim 1 or 2, wherein before the sending a multicast processing request message encapsulated by a second protocol to a second DC, the method further comprises:
receiving a multicast group join message sent by a Network Virtualization using Generic Routing Encapsulation, NVGRE, gateway corresponding to the subnet; and
the sending a multicast processing request message encapsulated by a second protocol to a second DC comprises:
sending a multicast group join request message comprising the multicast group information to the second DC, so that the second DC establishes a connection with a multicast group corresponding to the multicast group information.

5. A method for processing a multicast group, comprising:
receiving, from a data center interconnect DCI router of a first data center DC, a multicast processing request message comprising multicast group information, wherein the multicast processing request message is encapsulated by a second protocol; wherein a first protocol is used for communications in the first DC; and
performing multicast group processing according to the multicast group information.

6. The method according to claim 5, wherein the second protocol comprises:
the Internet Group Management Protocol, IGMP, or the Multicast Listener Discovery, MLD, protocol.

7. The method according to claim 5 or 6, wherein the receiving, from a data center interconnect DCI router of a first DC, a multicast processing request message comprising multicast group information comprises:
receiving, from the DCI router of the first DC, a multicast group leave request message comprising the multicast group information; and
the performing multicast group processing according to the multicast group information comprises:
disconnecting a connection with a multicast group corresponding to the multicast group information of the first DC according to the multicast group leave request message.

8. The method according to claim 5 or 6, wherein the receiving, from a data center interconnect DCI router of a first DC, a multicast processing request message comprising multicast group information comprises:
receiving, from the DCI router of the first DC, a multicast group join request message comprising the multicast group information; and
the performing multicast group processing according to the multicast group information comprises:
establishing a connection with a multicast group corresponding to the multicast group information of the first DC according to the multicast group join request message.

9. A data center interconnect DCI router, comprising:
an acquiring module, configured to acquire multicast group information of a subnet in a first data center DC, wherein a first protocol is used for communications in the first DC; and
a sending module, configured to send a multicast processing request message encapsulated by a second protocol to a second DC, wherein the multicast processing request message comprises the multicast group information.

10. The DCI router according to claim 9, wherein the first protocol comprises the Protocol Independent Multicast, PIM, protocol; and
the second protocol comprises the Internet Group Management Protocol, IGMP, or the Multicast Listener Discovery, MLD, protocol to the second DC.

11. The DCI router according to claim 9 or 10, wherein the acquiring module is further configured to receive a multicast group leave message sent by a Network Virtualization using Generic Routing Encapsulation, NVGRE, gateway corresponding to the subnet; and
the sending module is configured to send a multicast group leave request message comprising the multicast group information to the second DC, so that the second DC disconnects a connection with a multicast group corresponding to the multicast group information.

12. The DCI router according to claim 9 or 10, wherein:
the acquiring module is further configured to receive a multicast group join message sent by a Network Virtualization using Generic Routing Encapsulation, NVGRE, gateway corresponding to the subnet; and
the sending module is configured to send a multicast group join request message comprising the multicast group information to the second DC, so that the second DC establishes a connection with a multicast group corresponding to the multicast group information.

13. A data center interconnect DCI router, comprising:
a receiving module, configured to receive, from a data center interconnect DCI router of a first data center DC, a multicast processing request message comprising multicast group information, wherein the multicast processing request message is encapsulated by a second protocol, and a first protocol is used for communications in the first DC; and
a processing module, configured to perform multicast group processing according to the multicast group information.

14. The DCI router according to claim 13, wherein the receiving module is configured to receive, from the DCI router of the first DC, a multicast group leave request message comprising the multicast group information; and
the processing module is configured to disconnect a connection with a multicast group corresponding to the multicast group information of the first DC according to the multicast group leave request message.

15. The DCI router according to claim 13, wherein:
the receiving module is configured to receive, from the DCI router of the first DC, a multicast group join request message comprising the multicast group information; and
the processing module is configured to establish a connection with a multicast group corresponding to the multicast group information of the first DC according to the multicast group join request message.
